# EUROPÄISCHE PATENTSCHRIFT

(11) **EP 3 280 902 B1**
(45) Veröffentlichungstag und Bekanntmachung des Hinweises auf die Patenterteilung: **08.05.2019**
(21) Anmeldenummer: 16711255.6
(22) Anmeldetag: 21.03.2016
(51) Int. Cl.: F02M 21/02

(54) **GASVENTIL**
GAS VALVE
VALVE À GAZ

(30) Priorität: 08.04.2015 DE 102015206205
(43) Veröffentlichungstag der Anmeldung: 14.02.2018
(73) Patentinhaber: Robert Bosch GmbH, 70442 Stuttgart (DE)
(72) Erfinder: WESSNER, Jochen, 73728 Esslingen (DE); WIEDMANN, Felix, 70469 Stuttgart (DE)
(86) Internationale Anmeldenummer: PCT/EP2016/056101
(87) Internationale Veröffentlichungsnummer: WO 2016/162191

(56) Entgegenhaltungen:
- EP-A2- 2 818 679
- DE-A1- 10 353 011
- DE-A1-102007 060 395
- DE-A1-102012 201 413

## Beschreibung

Die Erfindung betrifft ein Gasventil zum Eindosieren eines gasförmigen Brennstoffs in einen Ansaugtrakt einer Verbrennungskraftmaschine mit den Merkmalen des Oberbegriffs des Anspruchs 1.

### Stand der Technik

Ein Gasventil der vorstehend genannten Art kann insbesondere zur Brennstoffversorgung von Gas- oder Gas-Diesel-Motoren in Personenkraft- oder Nutzfahrzeugen, in Schienenfahrzeugen und/oder auf Schiffen verwendet werden. Weitere mögliche Applikationen stellen Gas- oder Gas-Diesel-Motoren in Anlagen zur Energiegewinnung und/oder Energieerzeugung dar.

Aus der Offenlegungsschrift DE 103 53 011 A1 geht beispielhaft ein Gasventil hervor, das insbesondere für den Einsatz in einem Gasmotor ausgelegt ist und der Regelung eines Gasstroms von einer Zuströmseite zu einer Abströmseite dient. Das Gasventil weist ein Ventilgehäuse auf, in dem eine Betätigungseinheit für einen Magnetanker aufgenommen ist, der in dem Ventilgehäuse axial verschiebbar geführt ist. Der Magnetanker ist mit einem Ventilschließglied versehen, an dessen Stirnseite ein Dichtelement angeordnet ist, das derart mit einem an einer Sitzplatte ausgebildeten Ventilsitz zusammenwirkt, dass ein Gasstrom durch Abströmöffnungen der Sitzplatte steuerbar ist.

Aus der EP 2 818 679 A2 ist darüber hinaus ein Gasventil bekannt, das einen Magnetanker aufweist und mit einem Ventilsitz zusammenwirkt, in dem eine Vielzahl von Durchströmöffnungen ausgebildet sind.

Der vorliegenden Erfindung liegt die Aufgabe zugrunde, ein Gasventil anzugeben, das besonders kompaktbauend ist, eine hohe Stelldynamik besitzt und zugleich energetisch effizient arbeitet.

Zur Lösung der Aufgabe wird das Gasventil mit den Merkmalen des Anspruchs 1 vorgeschlagen. Vorteilhafte Weiterbildungen der Erfindung sind den Unteransprüchen zu entnehmen.

### Offenbarung der Erfindung

Das zum Eindosieren eines gasförmigen Brennstoffs in einen Ansaugtrakt einer Verbrennungskraftmaschine vorgeschlagene Gasventil umfasst einen Elektromagneten und einen mit dem Elektromagneten zusammenwirkenden hubbeweglichen Anker, der in Richtung eines Ventilsitzelements, das mindestens einen Ventilsitz ausbildet, von der Federkraft mindestens einer Schließfeder beaufschlagt ist. Erfindungsgemäß ist der Anker als Flachanker ausgebildet und umfasst mehrere Ankerteile, die ineinander axial beweglich geführt sind.

Dadurch, dass der Anker als Flachanker ausgebildet ist, wird ein besonders kompaktbauendes Gasventil geschaffen. Zumindest in axialer Richtung kann die Abmessung des Gasventils deutlich reduziert werden. In der Folge sinkt der Bauraumbedarf, so dass das Gasventil vielseitig einsetzbar ist.

Zugleich ist der Anker mehrteilig ausgeführt. Die mehrteilige Ausführung besitzt den Vorteil, dass das Gasventil in mehreren Stufen öffenbar ist. Das mehrstufige Öffnen wiederum ermöglicht eine große Mengenspreizung sowie eine genaue Dosierung des Gases. Vorteilhafterweise wirken die mehreren Ankerteile mit mehreren Ventilsitzen zusammen, die dann zeitlich versetzt öffenbar sind. Auf diese Weise können auch kleine Mengen des Gases definiert eingeblasen werden. Ferner kann durch die mehrteilige Ausführung des Ankers die zu bewegende Masse beim Öffnen reduziert werden. Hieraus folgt, dass die Dynamik steigt und der Energiebedarf sinkt.

Erfindungsgemäß sind mehrere Ventilsitze des Ventilsitzelements über die mehreren Ankerteile zeitlich versetzt öffenbar. Jedes mit einem Ventilsitz zusammenwirkende Ankerteil ist in Richtung des Ventilsitzes von der Federkraft mindestens einer Schließfeder beaufschlagt. Über die Federkraft der Schließfedern kann Einfluss auf die erforderliche Öffnungskraft genommen werden.

Indem die mehreren Teile des Ankers ineinander axial beweglich geführt sind, kann der Bauraumbedarf weiter reduziert werden. Die mehreren Teile des Ankers sind hierzu bevorzugt ineinander gesteckt. Die Anordnung erfolgt in der Weise, dass die mehreren Teile in axialer Richtung - zumindest über einen Teilbereich ihres Hubes - relativ zueinander beweglich sind.

Bevorzugt ist zumindest ein Ankerteil abschnittsweise hohlzylinderförmig ausgebildet. Der hohlzylinderförmige Abschnitt kann zur Aufnahme eines zylinderförmigen oder hohlzylinderförmigen Abschnitts eines weiteren Ankerteils genutzt werden. Ferner ist über den hohlzylinderförmigen Abschnitt eine Führung des hierin aufgenommenen weiteren Ankerteils gewährleistet.

Alternativ oder ergänzend wird vorgeschlagen, dass zumindest ein Ankerteil ein Ventilschließelement ausbildet, das eine mit einem Ventilsitz zusammenwirkende Dichtfläche oder einen die Dichtfläche ausbildenden Dichtkörper besitzt. Der Verzicht auf ein separates Ventilschließelement reduziert die Anzahl der Bauteile und fördert eine kompakte Bauweise des Gasventils. Sofern das Ventilschließelement nicht selbst eine Dichtfläche ausbildet, kann die Dichtfläche an einem Dichtkörper ausgebildet sein, der mit dem Ventilschließelement bzw. dem jeweiligen Ankerteil verbunden ist. Vorzugsweise ist der Dichtkörper aus einem elastischen Material, beispielsweise einem Elastomermaterial, gefertigt, um die Dichtwirkung zu erhöhen.

Ein Ventilschließelement kann beispielsweise über einen hohlzylinderförmigen Abschnitt eines Ankerteils ausgebildet werden. In diesem Fall ist der mit dem Ventilschließelement zusammenwirkende Ventilsitz ringförmig ausgebildet.

Darüber hinaus kann zumindest ein Ventilschließelement plattenförmig ausgebildet sein. In diesem Fall kann die Ankerplatte selbst oder eine zur Ankerplatte axial beabstandete Platte das Ventilschließelement ausbilden. Der axiale Abstand kann über einen zylinderförmigen oder hohlzylinderförmigen Abschnitt geschaffen werden.

Um eine ausreichende Umströmung der Ankerteile mit dem einzudosierenden Gas zu erreichen, wird ferner vorgeschlagen, dass zumindest ein Ventilschließelement von mindestens einem Zuströmkanal durchsetzt ist. In Abhängigkeit von der konkreten Ausgestaltung des Ventilschließelements kann der Zuströmkanal als Radialbohrung und/oder Axialbohrung ausgebildet sein. Darüber hinaus können als Zuströmöffnungen dienende Ausnehmungen im Ventilschließelement vorgesehen sein, die eine beliebige Geometrie aufweisen. Die Bohrungen und Öffnungen im Ventilschließelement bewirken zudem eine Reduzierung der Masse der Ankerteile, so dass die Dynamik weiter steigt.

Vorteilhafterweise besitzen die Ankerteile dem Elektromagneten zugewandte Polflächen, die unterschiedlich groß ausgebildet sind und/oder in axial versetzt zueinander liegenden Radialebenen angeordnet sind, wenn der Elektromagnet unbestromt ist. Das heißt, dass die Arbeitsluftspalte zwischen den Polflächen und dem Elektromagneten unterschiedlich groß gewählt sind. Aus diesen Maßnahmen - jeweils allein oder in Kombination - ergeben sich unterschiedliche, auf die mehreren Ankerteile einwirkende Öffnungsströme, so dass diese getrennt gesteuert werden können.

Gemäß einer bevorzugten Ausführungsform der Erfindung sind die Polflächen der Ankerteile in der Draufsicht segmentförmig ausgebildet. Gleiches gilt für die die Polflächen ausbildenden Ankerabschnitte der jeweiligen Ankerteile, so dass diese einfach ineinander gesteckt werden können. Vorzugsweise besitzen die Ankerteile jeweils mehrere segmentförmige Polflächen bzw. die Polflächen ausbildende Ankerabschnitte, die in gleichem Winkelabstand zueinander angeordnet sind. Auf diese Weise ist eine gleichmäßige Verteilung der Massen gewährleistet. Zudem können in den Zwischenräumen, die segmentförmigen Polflächen bzw. die Polflächen ausbildenden Ankerabschnitte des jeweils anderen Ankerteils aufgenommen werden.

Um einen Kontakt der die Polflächen ausbildenden Ankerabschnitte der mehreren Ankerteile untereinander zu verhindern bzw. auf ein Minimum zu reduzieren, kann zumindest ein Ankerteil mindestens ein Distanzelement aufweisen. Das Distanzelement kann beispielsweise in Form einer seitlich an einem segmentförmigen Ankerabschnitt des Ankerteils angeordneten Nase ausgebildet sein.

Über das vorgeschlagene Distanzelement kann ferner eine Zentrierung und/oder Führung des Ankerteils bewirkt werden.

Weiterhin vorzugsweise begrenzt zumindest ein Ventilsitz eine entlang einer Kreislinie verlaufende Durchlassöffnung. Alternativ oder ergänzend wird vorgeschlagen, dass ein Ventilsitz eine im Ventilsitzelement ausgebildete zentrale Durchlassbohrung begrenzt. Die mehreren Ventilsitze weisen somit unterschiedlich große Sitzdurchmesser auf, so dass hierüber der Massenstrom noch genauer einstellbar ist. Vorzugsweise sind die mehreren Ventilsitze konzentrisch zueinander angeordnet.

Des Weiteren wird vorgeschlagen, dass das Ventilsitzelement mehrteilig ausgeführt ist. Die mehrteilige Ausführung des Ventilsitzelements erleichtert die Ausbildung der mehren Ventilsitze. Vorzugsweise sind die mehreren Teile des Ventilsitzelements derart ineinander gesteckt, dass mindestens zwei Teile gemeinsam einen Ventilsitz ausbilden. Um zwei konzentrisch zueinander liegende Ventilsitze auszubilden, kann beispielsweise das Ventilsitzelement aus einem Außenteil, einem Mittelteil und einem Innenteil zusammengesetzt sein.

In vorteilhafter Weise sind die mehreren Ankerteile separat steuerbar. Um dies zu erreichen, können die Ankerteile - wie bereits erwähnt - unterschiedlich große Polflächen besitzen. Alternativ oder ergänzend kann der Arbeitsluftspalt zwischen den Polflächen und dem Elektromagnet unterschiedlich groß gewählt werden.

Aus den vorstehend genannten Gründen sind daher bevorzugt mehrere Schließfedern vorgesehen. Vorzugsweise ist eine Schließfeder in einer zentralen Ausnehmung eines Ankerteils eingesetzt und besitzt eine Federkraft, die größer oder kleiner als die einer weiteren Schließfeder gewählt ist. Das heißt, dass zumindest zwei Schließfedern vorgesehen sind, deren Federkraft unterschiedlich groß ist.

In Weiterbildung der Erfindung wird vorgeschlagen, dass zumindest ein Ankerteil in Richtung eines Ventilsitzes von der Federkraft mehrerer Schließfedern beaufschlagt ist. Um eine gleichmäßige Belastung des Ankerteils über die mehreren Schließfedern zu erreichen, sind diese exzentrisch und in gleichem Winkelabstand zueinander angeordnet. Die mehreren Schließfedern können dabei insbesondere an einem als Ventilschließelement dienenden plattenförmigen Abschnitt des Ankerteils abgestützt sein, so dass zugleich eine hohe Dichtkraft erreicht wird.

Im Falle mehrerer exzentrisch angeordneter Schließfedern sind diese demnach bevorzugt einerseits an dem Ankerteil abgestützt. Andererseits können sie an einem Stützelement abgestützt sein, das vorzugsweise ringförmig ausgebildet und in ein vorzugsweise hohlzylinderförmiges Ventilgehäuse eingesetzt ist. Das in das Ventilgehäuse einsetzbare separate Stützelement erleichtert die Montage des Gasventils.

Bevorzugte Ausführungsformen der Erfindung werden nachfolgend anhand der beigefügten Zeichnungen näher erläutert. Diese zeigen:
Fig. 1 einen schematischen Längsschnitt durch ein erfindungsgemäßes Gasventil gemäß einer ersten bevorzugten Ausführungsform,
Fig. 2 eine vergrößerten Ausschnitt aus der Fig. 1,
Fig. 3 eine perspektivische Darstellung des mehrteiligen Ankers des Gasventils der Fig. 1,
Fig. 4 eine Explosionsdarstellung des Ankers der Fig. 3 und
Fig. 5 einen schematischen Längsschnitt durch ein erfindungsgemäßes Gasventil gemäß einer weiteren bevorzugten Ausführungsform.

### Ausführliche Beschreibung der Zeichnungen

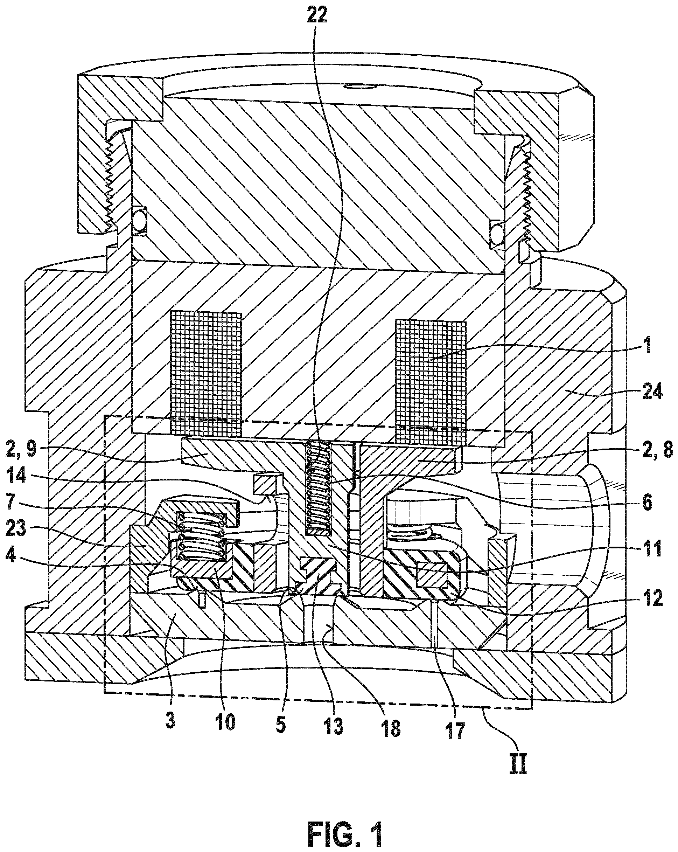

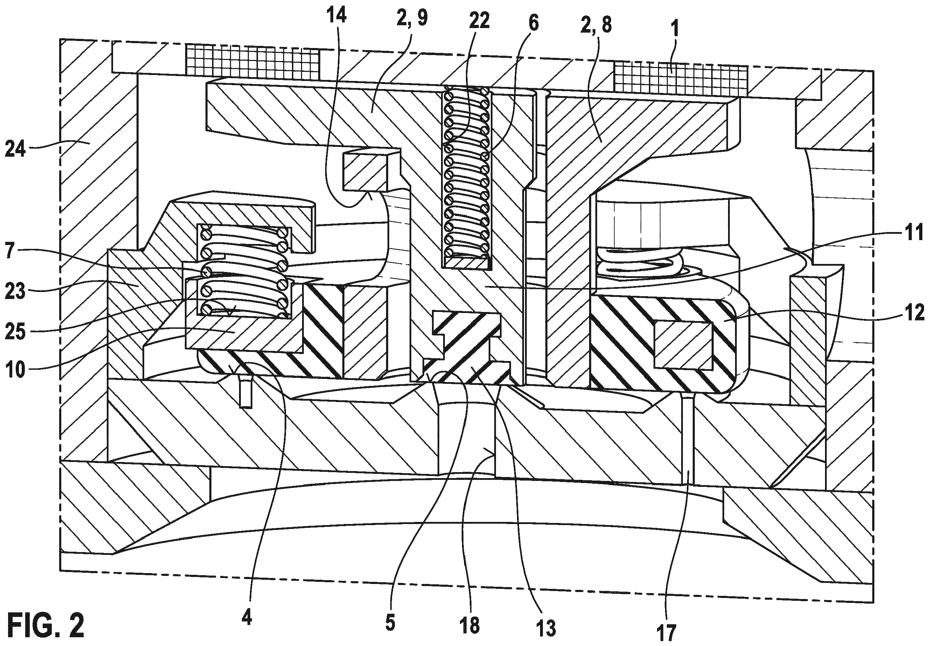

Das in den Figuren 1 und 2 dargestellte Gasventil weist ein hohlzylinderförmiges Ventilgehäuse 24 auf, in dem ein Elektromagnet 1 zur Einwirkung auf einen hubbeweglichen Anker 2 aufgenommen ist. Der Anker 2 ist mehrteilig ausgeführt und umfasst zwei ineinander gesteckte Ankerteile 8, 9, die in axialer Richtung relativ zueinander beweglich sind, so dass sie getrennt steuerbar sind. Die Ankerteile 8, 9 bilden zugleich Ventilschließelemente 10, 11 aus, denen Ventilsitze 4, 5 zugeordnet sind. Die Ventilsitze 4, 5 sind in einem plattenförmigen Ventilsitzelement 3 ausgebildet, das ebenfalls in das Ventilgehäuse 24 eingesetzt ist.

Der Ventilsitz 5 begrenzt eine im Ventilsitzelement 3 ausgebildete zentrale Durchlassbohrung 18. Die Abdichtung wird über einen Dichtkörper 13 bewirkt, der gleich einem Stopfen stirnseitig in das Ventilschließelement 11 bzw. in das Ankerteil 9 eingesetzt ist. Das Ventilschließelement 11 ist von einem hohlzylinderförmigen Abschnitt des Ankerteils 8 umgeben, das zugleich das Ventilschließelement 10 ausbildet. Hierzu weist das Ankerteil 8 einen an den hohlzylinderförmigen Abschnitt angesetzten plattenförmigen Abschnitt auf, der einen Dichtkörper 12 trägt bzw. von diesem umgeben ist. Der Dichtkörper 12 wirkt mit dem Ventilsitz 4 zusammen, der ringförmig ausgebildet ist und eine entlang einer Kreislinie verlaufende Durchlassöffnung 17 begrenzt.

Um eine gleichmäßige Verteilung des einzudosierenden Gases zu erreichen, weist das Ankerteil 8 Zuströmkanäle 14 auf. Im Bereich des hohlzylinderförmigen Abschnitts sind diese als Radialbohrungen ausgebildet und im Bereich des plattenförmigen Abschnitts als Axialbohrungen. Die Zuströmkanäle 14 verringern die Masse des Ankerteils 8, was sich günstig auf die Stelldynamik auswirkt.

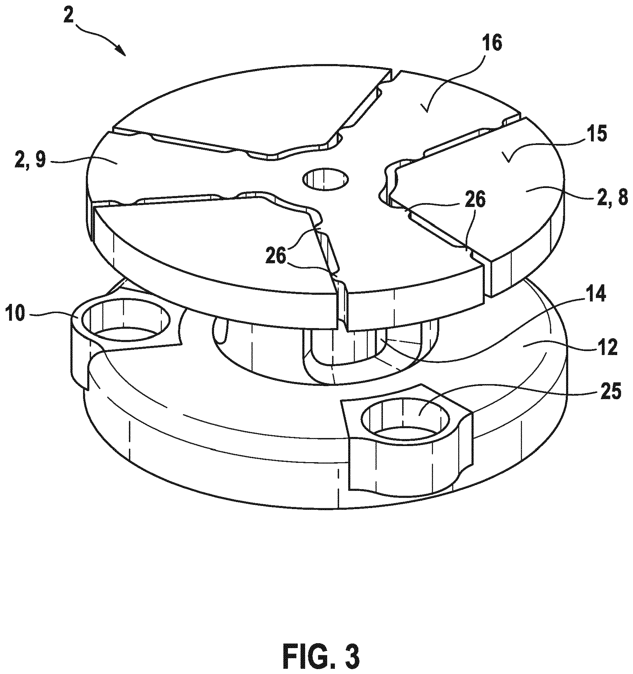

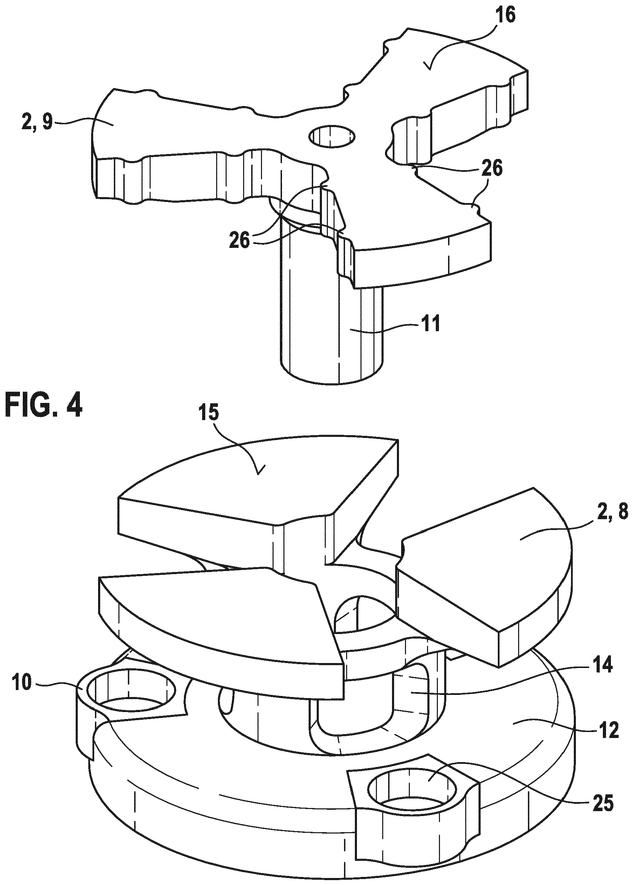

Eine weitere Massenreduzierung wird dadurch erreicht, dass die Ankerteile 8, 9 Polflächen 15, 16 ausbildende segmentförmige Abschnitte aufweisen. Wie den Figuren 3 und 4 zu entnehmen ist, weist jedes Ankerteil 8, 9 drei solcher segmentförmiger Abschnitte auf. Zwischen den segmentförmigen Abschnitten sind segmentförmige Zwischenräume ausgebildet, in denen die segmentförmigen Abschnitte des jeweils anderen Ankerteils 9, 8 aufgenommen sind. Seitlich an den segmentförmigen Abschnitten des Ankerteils 9 angeordnete Distanzelemente 26 gewährleisten, dass ein Abstand eingehalten wird, der eine gegenseitige Beeinflussung der Ankerteile 8, 9 verhindern soll. Ferner wird über die Distanzelemente 26 eine Zentrierung und eine Führung der Ankerteile 8, 9 bewirkt.

Um die Ventilsitze 4, 5 zeitlich versetzt öffnen zu können, lasten auf den Ankerteilen 8, 9 unterschiedlich große Federkräfte. Wie insbesondere der Fig. 2 zu entnehmen ist, wird das Ankerteil 9 in Richtung des Ventilsitzes 5 von der Federkraft einer zentral angeordneten Schließfeder 6 beaufschlagt, die in einer zentralen Ausnehmung 22 des Ankerteils 9 eingesetzt ist. Das Ankerteil 8 wird demgegenüber von der Federkraft mehrerer Schließfedern 7 beaufschlagt, die exzentrisch und in gleichem Winkelabstand zueinander angeordnet sind. Die Federkraft der mehreren Schließfedern 7 ist insgesamt größer als die der Schließfeder 6, so dass die erforderliche Öffnungskraft zum Öffnen des Ventilsitzes 5 entsprechend geringer ist. Unterstützend wirkt hierbei der kleinere Sitzdurchmesser des Ventilsitzes 5.

Wird der Elektromagnet 1 zum Öffnen des Gasventils bestromt, erfolgt der Vorgang des Öffnens in mehreren Stufen. In der ersten Stufe, d. h. bei einem ersten Stromniveau, hebt zunächst nur das Ankerteil 9 vom Ventilsitz 5 ab, während die Federkraft der Schließfedern 7 das Ankerteil 8 weiterhin gegen den Ventilsitz 4 drückt. Günstig wirkt sich hierbei auch die geringere Masse des Ankerteils 9 aus (siehe Fig. 4). Durch schnelles Öffnen und Schließen des Ventilsitzes 5 können kleine Mengen Gas definiert eingeblasen werden. In einer zweiten Stufe, d. h. bei angehobenem Stromniveau, hebt auch das Ankerteil 8 von seinem Ventilsitz 4 ab. Auf diese Weise können große Massenströme erzielt werden.

Die mehreren exzentrisch angeordneten Schließfedern 7 sind einerseits am Ankerteil 8 abgestützt, das hierzu napfartige Ausnehmungen 25 aufweist. Andererseits erfolgt die Abstützung über ein ringförmiges Stützelement 23, das in das Ventilgehäuse 24 eingesetzt ist. Das Stützelement 23 erleichtert die Montage des Gasventils.

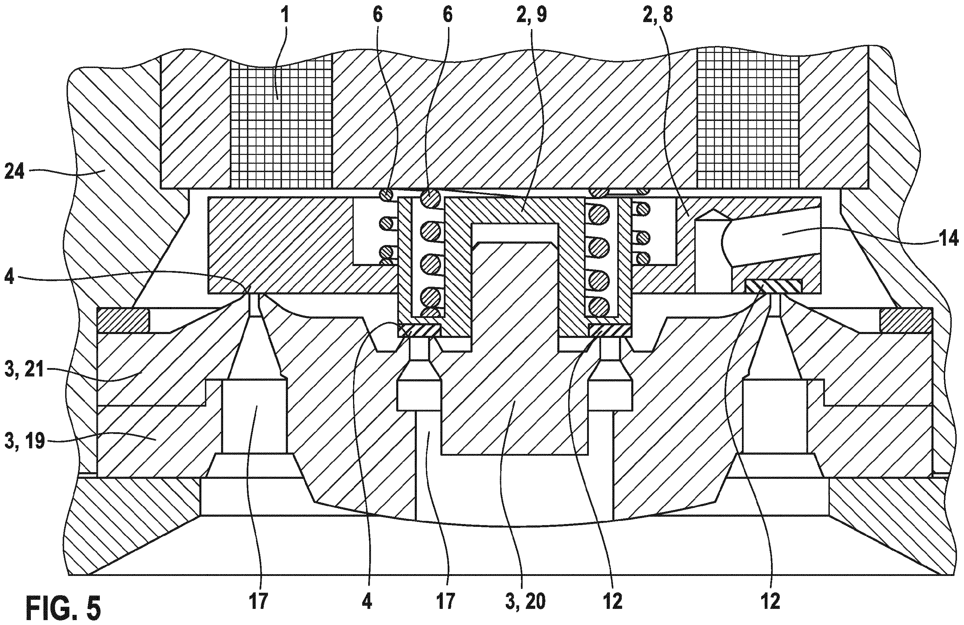

Der Fig. 5 ist eine weitere bevorzugte Ausführungsform eines erfindungsgemäßen Gasventils zu entnehmen. Dieses weist nicht nur einen mehrteilig ausgeführten Anker 2 auf, sondern ferner ein mehrteilig ausgeführtes Ventilsitzelement 3. Dieses umfasst ein im Wesentlichen plattenförmiges erstes Teil 19, ein hierin eingesetztes zweites Teil 20 sowie ein ringförmiges drittes Teil 21. Die drei Teile 19, 20, 21 sind derart ineinander gesetzt, dass das Teil 19 mit den beiden anderen Teilen 20 und 21 jeweils einen ringförmigen Ventilsitz 4 ausbildet. Die Durchlassöffnungen 17 werden demnach jeweils durch zwei der drei Teile 19, 20, 21 begrenzt. Eine zentrale Durchlassbohrung 18 gibt es in diesem Fall nicht.

Die mehrteilige Ausführung des Ventilsitzelements 3 besitzt den Vorteil, dass unterschiedliche Teile 19, 20, 21 vorgehalten und kombiniert werden können, so dass eine große Universalität erreichbar ist. Ferner können Ventilsitze mit kleinen Sitzbreiten einfacher gefertigt werden.

Ein weiterer Unterschied zum Gasventil der Figuren 1 und 2 besteht in der Ausgestaltung des Ankers 2, der vorliegend besonders kompaktbauend ist.

## Patentansprüche

1. Gasventil zum Eindosieren eines gasförmigen Brennstoffs in einen Ansaugtrakt einer Verbrennungskraftmaschine, umfassend einen Elektromagneten (1) und einen mit dem Elektromagneten (1) zusammenwirkenden hubbeweglichen Anker (2), der in Richtung eines Ventilsitzelements (3), das mindestens einen Ventilsitz (4, 5) ausbildet, von der Federkraft mindestens einer Schließfeder (6, 7) beaufschlagt ist,
**dadurch gekennzeichnet, dass** der Anker (2) als Flachanker ausgebildet ist und mehrere Ankerteile (8, 9) umfasst, die ineinander axial beweglich geführt sind, wobei mehrere Ventilsitze (4, 5) über die mehreren Ankerteile (8, 9) zeitlich versetzt öffenbar sind und wobei jedes mit einem Ventilsitz (4, 5) zusammenwirkende Ankerteil (8, 9) in Richtung des Ventilsitzes (4, 5) von der Federkraft mindestens einer Schließfeder (6, 7) beaufschlagt ist.

2. Gasventil nach Anspruch 1,
**dadurch gekennzeichnet, dass** zumindest ein Ankerteil (8, 9) abschnittsweise hohlzylinderförmig ausgebildet ist und/oder ein Ventilschließelement (10, 11) ausbildet, das eine mit einem Ventilsitz (4, 5) zusammenwirkende Dichtfläche oder einen die Dichtfläche ausbildenden Dichtkörper (12, 13) besitzt.

3. Gasventil nach Anspruch 2,
**dadurch gekennzeichnet, dass** zumindest ein Ventilschließelement (10) plattenförmig ausgebildet ist und/oder von mindestens einem Zuströmkanal (14) durchsetzt ist.

4. Gasventil nach einem der vorhergehenden Ansprüche,
**dadurch gekennzeichnet, dass** die Ankerteile (8, 9) dem Elektromagneten (1) zugewandte Polflächen (15, 16) besitzen, die unterschiedlich groß ausgebildet sind und/oder in axial versetzt zueinander liegenden Radialebenen angeordnet sind, wenn der Elektromagnet (1) unbestromt ist.

5. Gasventil nach Anspruch 4,
**dadurch gekennzeichnet, dass** die Polflächen (15, 16) der Ankerteile (8, 9) in der Draufsicht segmentförmig ausgebildet sind, wobei vorzugsweise die Ankerteile (8, 9) jeweils mehrere segmentförmige Polflächen (15, 16) besitzen, die in gleichem Winkelabstand zueinander angeordnet sind.

6. Gasventil nach einem der vorhergehenden Ansprüche,
**dadurch gekennzeichnet, dass** das Ventilsitzelement (3) mehrere Ventilsitze (4, 5) ausbildet, wobei zumindest ein Ventilsitz (4) eine entlang einer Kreislinie verlaufende Durchlassöffnung (17) und/oder ein Ventilsitz (5) eine im Ventilsitzelement (3) ausgebildete zentrale Durchlassbohrung (18) begrenzt.

7. Gasventil nach einem der vorhergehenden Ansprüche,
**dadurch gekennzeichnet, dass** das Ventilsitzelement (3) mehrteilig ausgeführt ist, wobei vorzugsweise mehrere Teile (19, 20, 21) derart ineinander gesteckt sind, dass mindestens zwei Teile (19, 20, 21) gemeinsam einen Ventilsitz (4, 5) ausbilden.

8. Gasventil nach einem der vorhergehenden Ansprüche,
**dadurch gekennzeichnet, dass** mehrere Schließfedern (6, 7) vorgesehen sind, von denen vorzugsweise eine Schließfeder (6) in einer zentralen Ausnehmung (22) eines Ankerteils (9) eingesetzt ist und eine Federkraft besitzt, die größer oder kleiner als die einer weiteren Schließfeder (7) gewählt ist.

9. Gasventil nach einem der vorhergehenden Ansprüche,
**dadurch gekennzeichnet, dass** zumindest ein Ankerteil (8) in Richtung eines Ventilsitzes (4) von der Federkraft mehrerer Schließfedern (7) beaufschlagt ist, die exzentrisch und in gleichem Winkelabstand zueinander angeordnet sind.

10. Gasventil nach Anspruch 9,
**dadurch gekennzeichnet, dass** die Schließfedern (7) einerseits an dem Ankerteil (8) und andererseits an einem Stützelement (23) abgestützt sind, das vorzugsweise ringförmig ausgebildet und in ein vorzugsweise hohlzylinderförmiges Ventilgehäuse (24) eingesetzt ist.

## Claims

1. Gas valve for metering a gaseous fuel into an intake section of an internal combustion engine, comprising an electromagnet (1) and an armature (2) which can be moved in a reciprocating manner, interacts with the electromagnet (1) and is loaded by the spring force of at least one closing spring (6, 7) in the direction of a valve seat element (3) which configures at least one valve seat (4, 5), **characterized in that** the armature (2) is configured as a flat armature and comprises a plurality of armature parts (8, 9) which are guided so as to be moved axially into one another, it being possible for a plurality of valve seats (4, 5) via the plurality of armature parts (8, 9) to be opened in a temporally staggered manner, and each armature part (8, 9) which interacts with a valve seat (4, 5) being loaded by the spring force of at least one closing spring (6, 7) in the direction of the valve seat (4, 5).

2. Gas valve according to Claim 1, **characterized in that** at least one armature part (8, 9) in sections is of hollow-cylindrical configuration and/or configures a valve closing element (10, 11) which has a sealing face which interacts with a valve seat (4, 5) or a sealing body (12, 13) which configures the sealing face.

3. Gas valve according to Claim 2, **characterized in that** at least one valve closing element (10) is of plate-shaped configuration and/or is penetrated by at least one inflow channel (14).

4. Gas valve according to one of the preceding claims, **characterized in that** the armature parts (8, 9) have pole faces (15, 16) which face the electromagnet (1), are configured with different sizes and/or are arranged in radial planes which lie offset axially with respect to one another when the electromagnet (1) is de-energized.

5. Gas valve according to Claim 4, **characterized in that** the pole faces (15, 16) of the armature parts (8, 9) are of segment-shaped configuration in plan view, the armature parts (8, 9) preferably having in each case a plurality of segment-shaped pole faces (15, 16) which are arranged at an identical angular spacing from one another.

6. Gas valve according to one of the preceding claims, **characterized in that** the valve seat element (3) configures a plurality of valve seats (4, 5), at least one valve seat (4) delimiting a passage opening (17) which runs along a circular line, and/or a valve seat (5) delimiting a central passage bore (18) which is configured in the valve seat element (3).

7. Gas valve according to one of the preceding claims, **characterized in that** the valve seat element (3) is configured in multiple pieces, a plurality of parts (19, 20, 21) preferably being plugged into one another in such a way that at least two parts (19, 20, 21) together configure a valve seat (4, 5).

8. Gas valve according to one of the preceding claims, **characterized in that** a plurality of closing springs (6, 7) are provided, on which one closing spring (6) is preferably inserted in a central recess (22) of an armature part (9) and has a spring force which is selected to be greater or smaller than that of a further closing spring (7).

9. Gas valve according to one of the preceding claims, **characterized in that** at least one armature part (8) is loaded in the direction of a valve seat (4) by the spring force of a plurality of closing springs (7) which are arranged eccentrically and at an angular spacing from one another.

10. Gas valve according to Claim 9, **characterized in that** the closing springs (7) are supported on one side on the armature part (8) and on the other side on a supporting element (23) which is preferably of annular configuration and is inserted into a preferably hollow-cylindrical valve housing (24).

## Revendications

1. Soupape à gaz pour le dosage d'un carburant gazeux dans un conduit d'aspiration d'un moteur à combustion interne, comprenant un électroaimant (1) et un induit mobile en levée (2) coopérant avec l'électroaimant (1), qui est soumis à la force de ressort d'au moins un ressort de fermeture (6, 7) en direction d'un élément de siège de soupape (3), qui forme au moins un siège de soupape (4, 5), **caractérisée en ce que** l'induit (2) est formé par un induit plat et comprend plusieurs parties d'induit (8, 9), qui sont guidées de façon mobile axialement l'une dans l'autre, dans laquelle plusieurs sièges de soupape (4, 5) peuvent être ouverts en décalage temporel par lesdites plusieurs parties d'induit (8, 9) et dans laquelle chaque partie d'induit (8, 9) coopérant avec un siège de soupape (4, 5) est soumise en direction du siège de soupape (4, 5) à la force de ressort d'au moins un ressort de fermeture (6, 7).

2. Soupape à gaz selon la revendication 1, **caractérisée en ce qu'**au moins une partie d'induit (8, 9) est réalisée en partie sous forme cylindrique creuse et/ou forme un élément de fermeture de soupape (10, 11), qui possède une face d'étanchéité coopérant avec un siège de soupape (4, 5) ou qui possède un corps d'étanchéité (12, 13) formant la face d'étanchéité.

3. Soupape à gaz selon la revendication 2, **caractérisée en ce qu'**au moins un élément de fermeture de soupape (10) est réalisé en forme de plaque et/ou est traversé par au moins un canal d'arrivée (14).

4. Soupape à gaz selon l'une quelconque des revendications précédentes, **caractérisée en ce que** les parties d'induit (8, 9) possèdent des faces polaires (15, 16) tournées vers l'électroaimant (1), qui sont de grandeur différente et/ou qui sont disposées dans des plans radiaux décalés axialement l'un de l'autre, lorsque l'électroaimant (1) n'est pas parcouru par un courant.

5. Soupape à gaz selon la revendication 4, **caractérisée en ce que** les faces polaires (15, 16) des parties d'induit (8, 9) sont réalisées en forme de segments dans une vue en plan, dans laquelle de préférence les parties d'induit (8, 9) possèdent respectivement plusieurs faces polaires en forme de segment (15, 16), qui sont disposées à égale distance angulaire l'une de l'autre.

6. Soupape à gaz selon l'une quelconque des revendications précédentes, **caractérisée en ce que** l'élément de siège de soupape (3) forme plusieurs sièges de soupape (4, 5), dans laquelle au moins un siège de soupape (4) limite une ouverture de passage (17) s'étendant le long d'une ligne circulaire et/ou un siège de soupape (5) limite une ouverture de passage centrale (18) formée dans l'élément de siège de soupape (3).

7. Soupape à gaz selon l'une quelconque des revendications précédentes, **caractérisée en ce que** l'élément de siège de soupape (3) est réalisé en plusieurs parties, dans laquelle de préférence plusieurs parties (19, 20, 21) sont engagées l'une dans l'autre de telle manière qu'au moins deux parties (19, 20, 21) forment ensemble un siège de soupape (4, 5).

8. Soupape à gaz selon l'une quelconque des revendications précédentes, **caractérisée en ce qu'**il est prévu plusieurs ressorts de fermeture (6, 7), dont de préférence un ressort de fermeture (6) est introduit dans un évidement central (22) d'une partie d'induit (9) et possède une force de ressort, qui est choisie supérieure ou inférieure à celle d'un autre ressort de fermeture (7) .

9. Soupape à gaz selon l'une quelconque des revendications précédentes, **caractérisée en ce qu'**au moins une partie d'induit (8) est soumise en direction d'un siège de soupape (4) à la force de ressort de plusieurs ressorts de fermeture (7), qui sont disposés de façon excentrique et à égale distance angulaire l'un de l'autre.

10. Soupape à gaz selon la revendication 9, **caractérisée en ce que** les ressorts de fermeture (7) prennent appui d'une part sur la partie d'induit (8) et d'autre part sur un élément de support (23), qui est de préférence de forme annulaire et qui est introduit dans un corps de soupape (24) de préférence de forme cylindrique creuse.
